(19) Europäisches Patentamt
European Patent Office
Office européen des brevets

(11) **EP 4 686 833 A1**

(12) **EUROPEAN PATENT APPLICATION**

(43) Date of publication:
**04.02.2026 Bulletin 2026/06**

(21) Application number: **25150410.6**

(22) Date of filing: **07.01.2025**

(51) International Patent Classification (IPC):
**F04D 25/08** (2006.01)    **F04D 27/00** (2006.01)
**F04D 29/58** (2006.01)

(52) Cooperative Patent Classification (CPC):
**F04D 29/582; F04D 25/08; F04D 27/001;**
**F04D 27/004;** F05D 2260/821

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(30) Priority: **02.08.2024 CN 202411059681**

(71) Applicant: **Vertiv Tech Co., Ltd.**
**Guangdong 518055 (CN)**

(72) Inventors:
• **NING, Weijiao**
**Xi an, 710005 (CN)**
• **JIAO, Jie**
**Xi an, 710005 (CN)**
• **TIAN, Jiao**
**Xi an, 710005 (CN)**
• **HU, Dawei**
**Xi an, 710005 (CN)**

(74) Representative: **Harden, Henry Simon**
**Kilburn & Strode LLP**
**Lacon London**
**84 Theobalds Road**
**London WC1X 8NL (GB)**

(54) **METHOD AND SYSTEM FOR PREDICTING LIFESPAN OF FAN, FAN, STORAGE MEDIUM, AND PROGRAM PRODUCT**

(57)     Provided are a method and a system for predicting a lifespan of a fan, a fan, a storage medium and a program product. The method includes: acquiring an ambient temperature of the fan; calculating a mechanical factor lifespan and an environmental factor lifespan of the fan, in a case where the ambient temperature of the fan meets a first condition; and fusing the mechanical factor lifespan and the environmental factor lifespan to output a remaining lifespan of the fan. By fusing the mechanical factor lifespan and the environmental factor lifespan of the fan, an accuracy in predicting a lifespan of the fan is improved, without increasing costs, and the remaining lifespan of the fan can be outputted in real time. Further, by monitoring the remaining lifespan of the fan, an effect of good thermal management performance and an extended lifespan of an equipment can be achieved.

Fig. 1

## Description

CROSS REFERENCE TO RELATED APPLICATION

This application claims priority to Chinese Patent Application No. 202411059681.9 filed on August 2, 2024 and entitled "Method and system for predicting lifespan of fan, fan, storage medium, and program product", the disclosure of which is incorporated herein by reference in its entirety.

## FIELD

The present disclosure relates to the technical field of cooling fans, and in particular to a method and a system for predicting a lifespan of a fan, a fan, a storage medium and a program product.

## BACKGROUND

As an electronic product is becoming smaller in dimension, greater heat is generated per unit volume of a chip. A fan, as a main heat dissipation component, requires a critical guarantee for long-term effective operation. A health condition of the fan is directly related to a cooling efficiency of a system, and in turn affects the safety, reliability and lifespan of an equipment. Therefore, failure prediction and health management of a cooling fan is urgently needed. In the field of engineering, researches on cooling fans mainly focus on two aspects, i.e., fault diagnosis, and lifespan prediction and reliability assessment.

When conducting the lifespan prediction and reliability assessment, it is found that a lifespan of a fan cannot be predicted accurately when an ambient temperature where the fan is running is excessively low or excessively high.

## SUMMARY

Embodiments of the present disclosure provide a method and a system for predicting a lifespan of a fan, a fan, a storage medium and a program product, with which an effect of improving an accuracy in predicting a lifespan of a fan is realized.

In a first aspect, a method for predicting a lifespan of a fan is provided in an embodiment of the present disclosure. The method includes:

acquiring an ambient temperature of the fan;

calculating a mechanical factor lifespan and an environmental factor lifespan of the fan, in a case where the ambient temperature of the fan meets a first condition, where the first condition is that the ambient temperature is less than or equal to a first preset temperature, or that the ambient temperature is greater than or equal to a second preset temperature, where the first preset temperature is less than the second preset temperature; and

fusing the mechanical factor lifespan and the environmental factor lifespan to output a remaining lifespan of the fan.

In an embodiment, the calculating a mechanical factor lifespan and an environmental factor lifespan of the fan, in a case where the ambient temperature of the fan meets a first condition, includes:

acquiring, for a fan motor, an initial rise time to reach a first preset speed and an initial fall time to reach a second preset speed;

acquiring, for the fan motor, an actual rise time to reach the first preset speed and an actual fall time to reach the second preset speed; and

characterizing the mechanical factor lifespan of the fan based on the initial rise time, the actual rise time, the initial fall time and the actual fall time of the fan motor.

In an embodiment, the method further includes, before the characterizing the mechanical factor lifespan of the fan based on the initial rise time, the actual rise time, the initial fall time and the actual fall time of the fan motor:

determining that the fan is ineffective in a case where the actual rise time of the fan motor is greater than or equal to twice the initial rise time; or

determining that the fan is ineffective in a case where the actual fall time of the fan motor is less than or equal to half of the initial fall time.

In an embodiment, the characterizing the mechanical factor lifespan of the fan based on the initial rise time, the actual rise time, the initial fall time and the actual fall time of the fan motor includes:

calculating a rise time lifespan and a fall time lifespan of the fan based on the initial rise time, the actual rise time, the initial fall time and the actual fall time of the fan motor; and

fusing the rise time lifespan and the fall time lifespan of the fan to obtain the mechanical factor lifespan of the fan.

In an embodiment, the fusing the mechanical factor lifespan and the environmental factor lifespan to output a remaining lifespan of the fan further includes: determining that the fan is ineffective in a case where the environmental factor lifespan of the fan is zero and/or the mechanical factor lifespan of the fan is zero.

In an embodiment, the method includes:

fusing the mechanical factor lifespan and the environmental factor lifespan by using a weighted coefficient method, in a case where the environmental factor lifespan of the fan and the mechanical factor lifespan of the fan are both greater than zero; and

outputting the remaining lifespan of the fan after the fusing.

In an embodiment, the method further includes:

acquiring a rated temperature of the fan;

calculating a loss factor of the fan lifespan based on the rated temperature of the fan and the ambient temperature; and

obtaining the environmental factor lifespan of the fan based on the loss factor of the fan lifespan.

In an embodiment, the method further includes, before the acquiring an ambient temperature of the fan: acquiring initial data of the fan, where the initial data of the fan includes a rated temperature and a lifespan of the fan, and an initial rise time and an initial fall time of a motor speed of the fan.

In an embodiment, the method further includes:

calculating the environmental factor lifespan of the fan, in a case where the ambient temperature of the fan fails to meet the first condition; and

outputting the remaining lifespan of the fan based on the environmental factor lifespan of the fan and a lifespan of the fan in a previous state.

In a second aspect, a system for predicting a lifespan of a fan is also provided in an embodiment of the present disclosure. The system includes:

an acquisition module, configured to acquire an ambient temperature of the fan; and

a processing module, configured to calculate a mechanical factor lifespan and an environmental factor lifespan of the fan, in a case where the ambient temperature of the fan meets a first condition, where the first condition is that the ambient temperature is less than or equal to a first preset temperature, or that the ambient temperature is greater than or equal to a second preset temperature, where the first preset temperature is less than the second preset temperature, and fuse the mechanical factor lifespan and the environmental factor lifespan to output a remaining lifespan of the fan.

In a third aspect, a fan is provided in an embodiment of the present disclosure. The fan includes a memory and a processor; where

the memory stores computer executable instructions; and

the processor executes the computer executable instructions stored in the memory to perform the method for predicting a lifespan of a fan according to any of the above embodiments.

In a fourth aspect, a computer-readable storage medium is provided in an embodiment of the present disclosure. The computer-readable storage medium has computer executable instructions stored thereon, and the computer executable instructions, when executed by a processor, implement the method for predicting a lifespan of a fan according to any of the above embodiments.

In a fifth aspect, a computer program product is further provided in an embodiment of the present disclosure. The computer program product includes a computer program that, when executed by a processor, implements the method for predicting a lifespan of a fan according to any of the above embodiments.

The method and the system for predicting a lifespan of a fan, the fan, the storage medium and the program product are provided in the embodiments of the present disclosure. The method for predicting a lifespan of a fan includes: acquiring an ambient temperature of the fan; calculating a mechanical factor lifespan and an environmental factor lifespan of the fan, in a case where the ambient temperature of the fan meets a first condition, where the first condition is that the ambient temperature is less than or equal to a first preset temperature, or that the ambient temperature is greater than or equal to a second preset temperature, where the first preset temperature is less than the second preset temperature; and fusing the mechanical factor lifespan and the environmental factor lifespan to output a remaining lifespan of the fan. By fusing the mechanical factor lifespan and the environmental factor lifespan of the fan, an accuracy in predicting a lifespan of the fan is improved, without increasing costs, and the remaining lifespan of the fan can be outputted in real time. Further, by monitoring the remaining lifespan of the fan, an effect of good thermal management performance and an extended lifespan of the equipment can be achieved.

**BRIEF DESCRIPTION OF THE DRAWINGS**

Accompanying drawings here are incorporated in and constitute a part of this specification. The drawings illustrate embodiments consistent with the present disclosure and, together with the specification, explain principles of the present disclosure.

Figure 1 is a flow chart of a method for predicting a lifespan of a fan according to an embodiment of the present disclosure;

Figure 2 is a diagram showing a relationship between loss factor of a fan lifespan versus temperature according to an embodiment of the present disclosure;

Figure 3 is a flow chart of a method for predicting a lifespan of a fan according to an embodiment of the present disclosure;

Figure 4 is a block diagram of predicting a mechanical factor lifespan according to an embodiment of the present disclosure;

Figure 5 is a block diagram of predicting a remaining lifespan of a fan according to an embodiment of the present disclosure; and

Figure 6 is a schematic structural diagram of a fan according to an embodiment of the present disclosure.

Through the above-mentioned drawings, specific embodiments of the present disclosure are shown, and are described in further detail below. These drawings and descriptions are not intended to limit the scope of the concept of the present disclosure in any way, but are intended to illustrate the concepts of the present disclosure for those skilled in the art by referring to the specific embodiments.

**DETAILED DESCRIPTION**

Exemplary embodiments are described in detail hereinafter, and examples thereof are illustrated in the accompanying drawings. When the following description refers to the drawings, the same numbers in different drawings refer to the same or similar elements, unless otherwise indicated. The implementations described in the following exemplary embodiments do not represent all implementations consistent with the present disclosure. Rather, they are merely examples of apparatuses and methods consistent with some aspects of the present disclosure as detailed in the appended claims.

Terms involved in the present disclosure are explained first.

Bathtub curve: a failure rate curve that describes changes in failure rate during a life cycle of a product. A bathtub curve includes three stages as follows. In an infant mortality period, a product comes into use, during which a failure rate is high, and gradually decreases as time elapses. In a random failure period, the failure rate is low and relatively stable. In a wear-out failure period, as a usage time of the product increases, the failure rate begins to increase until the product is ineffective.

$L_{10}$ Standard: a basic rated lifespan $L_{10}$ refers to a lifespan that 90% of a representative set of bearings of a same type can be expected to achieve or exceed before subsurface material fatigue occurs.

As an electronic product is becoming smaller in dimension, greater heat is generated per unit volume of a chip. As a main heat dissipation component, a health condition of the fan is directly related to a cooling efficiency of the system. In a case where the fan is ineffective, the safety, reliability and lifespan of the equipment may be affected. Therefore, failure prediction and health management of a cooling fan is urgently needed. In a conventional technology, prediction of a fan lifespan considers only influence of an ambient temperature. However, in lifespan prediction and reliability assessment, it is found that: when the ambient temperature where the fan operates is excessively low, there is particulate matter adhered to the bearing, resulting in an increased resistance and wear; when a bearing temperature is greater than an escape temperature, the bearing may crack and be damaged; and when the ambient temperature where the fan operates is excessively high, grease on the bearing volatilizes and the resistance is increased, causing wear of the bearing, which affects a lifespan of the fan.

As provided in the present disclosure, the method for predicting a lifespan of a fan includes: acquiring an ambient temperature of the fan; calculating a mechanical factor lifespan and an environmental factor lifespan of the fan, in a case where the ambient temperature of the fan meets a first condition, where the first condition is that the ambient temperature is less than or equal to a first preset temperature, or that the ambient temperature is greater than or equal to a second preset temperature, where the first preset temperature is less than the second preset temperature; and fusing the mechanical factor lifespan and the environmental factor lifespan to output a remaining lifespan of the fan. By fusing the mechanical factor lifespan and the environmental factor lifespan of the fan, an accuracy in predicting a lifespan of the fan is improved, without increasing costs, and the remaining lifespan of the fan can be outputted in real time. Further, by monitoring the remaining lifespan of the fan, an effect of good thermal management performance and an extended lifespan of the equipment can be achieved.

The technical solution of the present disclosure and how the technical solution of the present disclosure solves the above-mentioned technical problems are described in detail below with specific embodiments. The following specific embodiments may be combined with each other, and the description of the same or similar concepts or processes may not be repeated in some embodiments. Hereinafter, embodiments of the present disclosure are described in conjunction with the accompanying drawings.

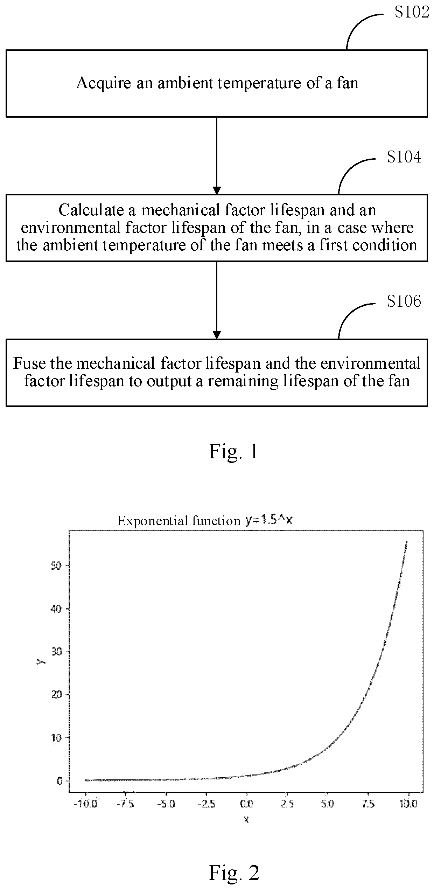

Reference is made to Figure 1, which is a flow chart of a method for predicting a lifespan of a fan according to an embodiment of the present disclosure. In an embodiment of the present disclosure, a method for predicting a lifespan of a fan is provided, including the following steps S 102 to S106.

In step S102, an ambient temperature of the fan is acquired.

In an implementation, the ambient temperature of the fan may be acquired through ADC (analog-to-digital converter) collection or a temperature sensor.

In step S 104, a mechanical factor lifespan and an environmental factor lifespan of the fan are calculated, in a case where the ambient temperature of the fan meets a first condition. The first condition is that the ambient temperature is less than or equal to a first preset temperature, or that the ambient temperature is greater than or equal to a second preset temperature, where the first preset temperature is less than the second preset temperature.

In an implementation, on detecting that the ambient temperature of the fan meets the first condition, the mechanical factor lifespan and the environmental factor lifespan of the fan are calculated. The mechanical factor lifespan refers to a part of a fan lifespan under the impact of a mechanical factor, such as bearing wear and motor failure. The environmental factor lifespan refers to a part of a fan lifespan under the impact of an environmental factor, such as the ambient temperature. The first preset temperature and the second preset temperature may be set based on an actual need, and are not limited in the present disclosure.

In an embodiment, the ambient temperature at which the fan operates is assumed to be in a range of [-40 °C, 120 °C]. In a case where $T_0$ represents 40 degrees Celsius, $\dfrac{T-T_0}{10}$ is in a range of [-8, 8]. The fan, at different temperatures, has a lifespan with a loss factor

$$AF = a^{\frac{T-T_0}{10}}$$

where $T_0$ represents a rated temperature of the fan in a factory lifespan test under the $L_{10}$ standard, T represents the ambient temperature of the fan as acquired, a represents a temperature failure rate constant, generally in a range from 1.5 to 2, and AF represents the loss factor of the lifespan of the fan at different temperatures. Figure 2 is a diagram showing a relationship between loss factor of a fan lifespan versus temperature according to an embodiment of the present disclosure. As shown in Figure 2, a higher temperature corresponds to a more serious loss of a fan lifespan, and a lower temperature corresponds to an acceleration factor of loss of the fan lifespan that approaches 0. However, an excessively high or excessively low temperature results in bearing wear, which in turn causes reduction of the lifespan of the fan. Therefore, according to the present disclosure, in a case where the ambient temperature of the fan meets the first condition, not only the impact of temperature on the lifespan of the fan is considered, but the impact of a mechanical factor in a high-temperature stage and a low-temperature stage is further introduced to compensate for the lifespan of the fan.

In step S106, the mechanical factor lifespan and the environmental factor lifespan are fused to output a remaining lifespan of the fan.

In a case where the ambient temperature of the fan meets the first condition, the lifespan of the fan is affected by both the environmental factor and the mechanical factor. Therefore, by fusing the mechanical factor lifespan and the environmental factor lifespan to output the remaining lifespan of the fan, the accuracy in predicting the lifespan of the fan can be improved. In addition, the lifespan of the fan can be predicted accurately without adding an additional hardware device.

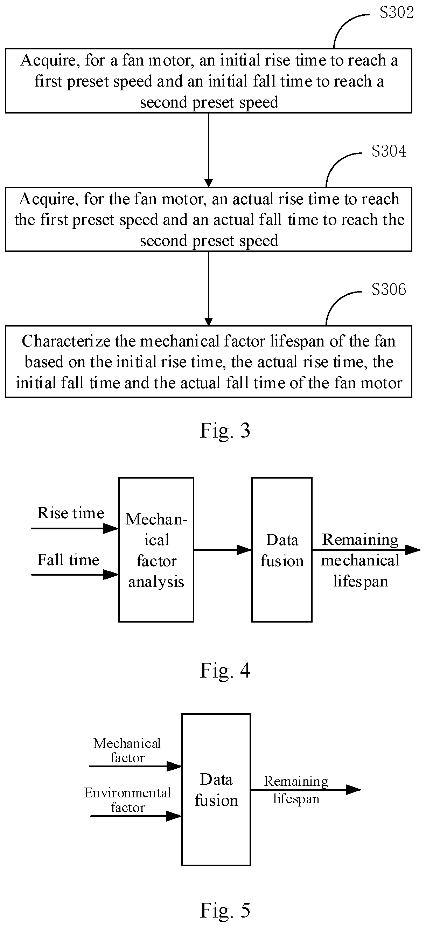

In an embodiment, step S104 further includes steps S302 to S306. Reference is made to Figure 3, which is a flow chart of a method for predicting a lifespan of a fan according to an embodiment of the present disclosure.

In step S302, for a fan motor, an initial rise time to reach a first preset speed and an initial fall time to reach a second preset speed are acquired.

In an implementation, the initial rise time refers to the time for the fan motor to reach the first preset speed by adjusting a duty cycle of the fan motor when the fan is set at the factory. Generally, the initial rise time refers to the time for the motor speed to increase from a low speed to a high speed. The initial fall time refers to the time for the fan motor to reach the second preset speed by adjusting a duty cycle of the fan motor when the fan is set at the factory. Generally, the initial fall time refers to the time for the motor speed to decrease from a high speed to a low speed.

In step S304, for the fan motor, an actual rise time to reach the first preset speed and an actual fall time to reach the second preset speed are acquired.

In step S306, the mechanical factor lifespan of the fan is characterized based on the initial rise time, the actual rise time, the initial fall time and the actual fall time of the fan motor.

In an embodiment, the method further includes, before step S306:
determining that the fan is ineffective in a case where the actual rise time of the fan motor is greater than or equal to twice the initial rise time; or determining that the fan is ineffective in a case where the actual fall time of the fan motor is less than or equal to half of the initial fall time.

In an implementation, the initial rise time of the fan is expressed as $t_1$, the actual rise time is expressed as $t_{up}$, and the fan is determined ineffective when the rise time satisfies $t_{up} \geq 2t_1$; and the initial fall time of the fan is expressed as $t_2$, the actual fall time of the operation is expressed as $t_{off}$, and the fan is determined ineffective when the fall time satisfies $t_{off} \leq 0.5t_2$. The above are two situations of fan ineffectiveness. It should be understood that, the fan ineffectiveness means that activation of the fan has no contribution to heat dissipation of a system or equipment.

In an embodiment, step S306 includes:

calculating a rise time lifespan and a fall time lifespan of the fan based on the initial rise time, the actual rise time, the initial fall time and the actual fall time of the fan motor; and

fusing the rise time lifespan and the fall time lifespan of the fan to obtain the mechanical factor lifespan of the fan.

In an implementation, in a case where the actual rise time and the actual fall time of the fan do not meet the above-mentioned situations of fan ineffectiveness, the initial rise time of the fan is expressed as $t_1$, the actual rise time of the operation is expressed as $t_{up}$, and the rise time lifespan of the fan is calculated as

$$L_{M-up} = \frac{2t_1 - t_{up}}{t_1} \times L_{10},$$

, based on the initial rise time and the actual rise time of the fan. Further, the initial fall time of the fan is expressed as $t_2$, the actual fall time of the operation is expressed as $t_{off}$, and the fall time lifespan of the fan is calculated as

$$L_{M-0ff} = \frac{t_{off} - 0.5t_2}{0.5t_2} \times L_{10}$$

, based on the initial fall time and the actual fall time of the fan.

The rise time and the fall time are two parameters of the fan related to a mechanical change characteristic of the system. Data fusion is performed on the lifespans obtained from the rise time and the fall time, that is, the rise time lifespan and the fall time lifespan of the fan are fused, to obtain the mechanical factor lifespan of the fan. Alternatively, the rise time lifespan and the fall time lifespan of the fan are fused through a weighted coefficient method, and a fusion result is the mechanical factor lifespan of the fan. Reference is made to Figure 4, which is a block diagram of predicting a mechanical factor lifespan according to an embodiment of the present disclosure. Here, $f_1(x)$ and $f_2(x)$ represent weights of the rise time lifespan and the fall time lifespan of the fan, respectively, values of which are in a range from 0 to 1, and a sum of the values is 1. A formula for calculating the mechanical factor lifespan M of the fan is as follows:

$$M = f_1(x) \times L_{M-up} + f_2(x) \times L_{M-0ff}.$$

In an embodiment, step S106 further includes: determining that the fan is ineffective in a case where the environmental factor lifespan of the fan is zero and/or the mechanical factor lifespan of the fan is zero.

In an implementation, to predict the remaining lifespan of the fan, the environmental factor lifespan of the fan and the mechanical factor lifespan of the fan are calculated, and the fan is determined ineffective in a case where either the environmental factor lifespan of the fan or the mechanical factor lifespan of the fan is zero.

In an embodiment, the method includes: fusing the mechanical factor lifespan and the environmental factor lifespan of the fan by using a weighted coefficient method, in a case where the environmental factor lifespan of the fan and the mechanical factor lifespan of the fan are both greater than zero; and outputting the remaining lifespan of the fan after the fusing.

In an implementation, the environmental factor lifespan of the fan and the mechanical factor lifespan of the fan are fused by using a weighted coefficient method. Reference is made to Figure 5, which is a block diagram of predicting a remaining lifespan of a fan according to an embodiment of the present disclosure. In the weighted coefficient method, respective weights are assigned based on the "bathtub curve". The remaining lifespan of the fan at a time instant is calculated as follows:

$$F = K_1 \times M + K_2 \times H.$$

In the equation, $K_1$ and $K_2$ represent weight coefficients of the mechanical factor lifespan and the environmental factor lifespan, respectively; H represents the environmental factor lifespan of the fan; and M represents the mechanical factor lifespan of the fan.

The bathtub curve refers to a failure rate curve, which is a function of time. An ordinate thereof represents a failure rate. With reference to failure modes of the fan, a probability assignment is made to weights of a mechanical factor and an environmental factor. The bathtub curve includes three stages. In an infant mortality period, a product starts to be used, and the failure rate starts high and gradually decreases as time elapses. In a random failure period, the failure rate is low and relatively stable. In a wear-out failure period, as a usage time of the product increases, the failure rate begins to increase until the product is ineffective. With the weighted coefficient method, the remaining lifespan of the fan is calculated comprehensively by assigning weights to different failure modes. At different stages of the life cycle, a mechanical factor and an environmental factor affect the lifespan of the fan at different weights. Weights are assigned based on the bathtub curve and the failure modes of the fan. In the infant mortality period, a mechanical failure is likely to dominate. This is because a manufacturing defect or assembly issue is more likely to be exposed at this stage. An impact of an environmental factor is relatively slight at this stage. In the random failure period, the mechanical factor and the environmental factor have balanced effects, and weights thereof may be close to each other. In the wear-out failure period, an impact of a mechanical failure gradually increases as mechanical components of the fan begin to wear out. An impact of the environmental factor may increase, but may be less weighted than the mechanical failure. From the above analysis, a probability assignment is made to the mechanical factor and the environmental factor. In the infant mortality period, the mechanical failure is assigned with a greater weight than the environmental failure. In the random failure period, there is a balance between weights of the mechanical failure and the environmental failure. In the wear-out failure period, the mechanical failure is assigned with a greater weight than the environmental failure. In the present disclosure, weights of the mechanical factor and the environmental factor are adjusted dynamically with weighting coefficients based on the bathtub curve. In this way, a lifespan of the fan is predicted more accurately, weights of the mechanical factor and the environmental factor are assigned more scientifically, and thereby the remaining lifespan of the fan is calculated accurately.

In an embodiment, the remaining lifespan of the fan is transmitted to a monitoring side through communication to display a health status of the fan, and the remaining lifespan of the fan is stored in a memory. When a health status percentage is less than D, the user is warned that the fan needs to be replaced in time. When the health status percentage continues to drop to E, an alarm or related action is issued to remind the user to replace the fan urgently. Alternatively, when the health status percentage is less than 20%, the user is warned that the fan needs to be replaced in time. When the health status percentage continues to drop to 10%, an alarm or related action is issued to remind the user to replace the fan immediately.

According to the present disclosure, no additional hardware device needs to be added, that is, there is no need to increase costs; a health level of the fan can be obtained on-line in real time for timely replacement; a prediction on the mechanical factor is added for the high-temperature stage and the low-temperature stage, so that the prediction accuracy is improved; and the thermal management performance is good, so that the equipment lifespan is extended.

In an embodiment, the method further includes:

acquiring a rated temperature of the fan;

calculating a loss factor of the fan lifespan based on the rated temperature of the fan and the ambient temperature; and

obtaining the environmental factor lifespan of the fan based on the loss factor of the fan lifespan.

In an implementation, the environmental factor lifespan of the fan is obtained as $H = L_{10}*AF$.

In an embodiment, the method further includes, before step S102:
acquiring initial data of the fan, where the initial data of the fan includes a rated temperature and a lifespan of the fan, and an initial rise time and an initial fall time of a motor speed of the fan.

In an implementation, it is first determined whether the fan is powered off and restarted. If yes, historical data of the fan and the initial data of the fan need to be read from a memory. If no, it is determined whether the fan is new. In a case where the fan is new, a factory lifespan and the initial data of the new fan are read by a monitoring terminal of the fan through communication, and are stored into the memory.

In an embodiment, the method further includes:

calculating the environmental factor lifespan of the fan, in a case where the ambient temperature of the fan fails to meet the first condition; and

outputting the remaining lifespan of the fan based on the environmental factor lifespan of the fan and a lifespan of the fan in a previous state.

In an implementation, in a case where the ambient temperature of the fan is greater than the first preset temperature and less than the second preset temperature, only the environmental factor lifespan of the fan needs to be calculated. Based on a rated ambient temperature $T_0$, the loss factor AF of the lifespan of the fan at a present temperature is calculated, then a lost lifespan at the present temperature is calculated based on a running time of the fan. A lifespan of the fan in a previous state is obtained. A remaining lifespan of the fan in a present state can be obtained by subtracting the lost lifespan in the present state from the lifespan in the previous state.

A system for predicting a lifespan of a fan is further provided in an embodiment of the present disclosure. The system includes: an acquisition module, configured to acquire an ambient temperature of the fan; and a processing module, configured to calculate a mechanical factor lifespan and an environmental factor lifespan of the fan, in a case where the ambient temperature of the fan meets a first condition, where the first condition is that the ambient temperature is less than or equal to a first preset temperature, or that the ambient temperature is greater than or equal to a second preset temperature, where the first preset temperature is less than the second preset temperature, and fuse the mechanical factor lifespan and the environmental factor lifespan to output a remaining lifespan of the fan.

In the present disclosure, without increasing the costs, the compensation algorithm for the mechanical factor lifespan is added in the method for predicting a lifespan of a fan, to compensate for the impact of the mechanical factor on the lifespan in the high-temperature and low-temperature stages, so that the prediction accuracy is improved; and the data fusion algorithm is added in the method, the weighting coefficients of different aging stages are assigned with different weights based on the "bathtub curve", so that data fusion of the mechanical factor lifespan and the environmental factor lifespan is realized. According to the present disclosure, the remaining lifespan of a fan can be accurately predicted under a wide range of ambient temperatures. The current shortcoming of less accuracy of prediction in the high-temperature and low-temperature stages is improved, and a detection of relevant factors can be completed quickly without affecting a normal operation of the system. Hence, the accuracy of lifespan prediction for the fan is improved, the equipment lifespan is extended, and a long-term safe and reliable operation of the equipment is ensured.

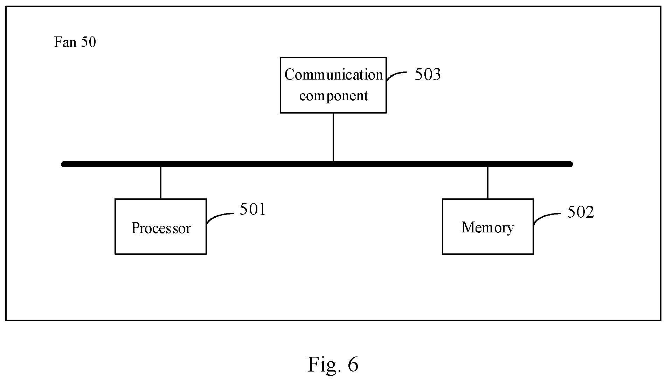

Figure 6 is a schematic structural diagram of a fan according to an embodiment of the present disclosure. As shown in Figure 6, the fan 50 provided in the embodiment includes at least one processor 501 and a memory 502. Alternatively, the fan 50 further includes a communication component 503. The processor 501, the memory 502 and the communication component 503 are connected via a bus.

In a specific implementation, the at least one processor 501 executes computer executable instructions stored in the memory 502, and thereby the at least one processor 501 executes the above method.

For a specific implementation of the processor 501, the method embodiments described above may be referred to. Implementation principles and technical effects thereof are similar to those of the method embodiments and are not repeated here in this embodiment.

In the above embodiment, it should be understood that the processor may be a central processing unit (CPU), or other general-purpose processor, a digital signal processor (DSP), an application specific integrated circuit (ASIC), and the like. A general-purpose processor may be a microprocessor or any conventional processor. The steps of the method disclosed in conjunction with the present disclosure may be directly embodied and executed by a hardware processor, or be executed by a combination of hardware and software modules in the processor.

The memory may include a high-speed random-access memory (RAM), and may further include a non-volatile memory (NVM), such as at least one disk memory.

The bus may be an industry standard architecture (ISA) bus, a peripheral component interconnect (PCI) bus, an extended industry standard architecture (EISA) bus, or the like. The bus may include an address bus, a data bus, a control bus, and the like. For ease of presentation, the bus in the drawings of the present disclosure is not limited to only one bus or one type of buses.

A computer program product is further provided in the present disclosure. The computer program product includes a computer program that, when executed by a processor, implements the method in any of the above embodiments.

A computer-readable storage medium is further provided in the present disclosure. The computer-readable storage medium has computer executable instructions stored thereon. The computer executable instructions, when executed by a processor, implement the method as described in any of the above embodiments.

The computer-readable storage medium may be implemented by any type of volatile or non-volatile storage device or a combination thereof. For example, the computer-readable storage medium is a static random-access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic disk, or an optical disk. The readable storage medium may be any available medium that can be accessed by a general or dedicated computer.

An exemplary readable storage medium is coupled to the processor such that the processor can read information from the readable storage medium and write information to the readable storage medium. Apparently, the readable storage medium may be an integral part of the processor. The processor and the readable storage medium may be located in an application specific integrated circuit (ASIC). Apparently, the processor and the readable storage medium may be discrete components in a device.

The modules are defined only based on logical functions, and there may be other manners of defining modules in actual implementations. For example, multiple units or components may be combined with each other or integrated into another system, or some features may be omitted or not implemented. In addition, the shown or discussed coupling or direct coupling or communication connection may be indirect coupling or communication connection through some interfaces, apparatuses or units, and may be electrical, mechanical or in other forms.

The units described as separate components may or may not be physically separated. Components shown as units may or may not be physical units, that is, the components may be located at a same position or distributed over multiple network units. Some or all of the units may be adopted based on an actual need to achieve the objective of the solutions in the embodiments of the present disclosure.

In addition, the functional units in the various embodiments of the present disclosure may be integrated into a single processing unit, or the units may be physically separated, or two or more of the units may be integrated into a same unit.

In a case that the functions are implemented in a form of a software functional unit and sold or used as an independent product, the functions may be stored in a computer-readable storage medium. Based on such understanding, part of the technical solutions of the embodiments of the present disclosure which are essential or contribute to the conventional technology, or part of the technical solutions may be embodied in a form of a software product. The computer software product is stored in a storage medium and includes instructions for causing a computer device (such as a personal computer, a server, or a network device) to perform all or part of the method steps described in the embodiments of the present disclosure. The storage medium includes a USB disk, a mobile hard drive, a read-only memory (ROM), a random-access memory (RAM), a magnetic disk or an optical disk, and other media capable of storing program codes.

Those of ordinary skills in the art can understand that all or part of the steps for implementing the method embodiments may be completed by hardwares related to program instructions. The aforementioned program may be stored in a computer-readable storage medium. The program, when executed, performs the steps in the above method embodiments. The aforementioned storage medium includes a ROM, a RAM, a magnetic disk, an optical disk, or other media capable of storing program codes.

Finally, it should be noted that other embodiments of the present disclosure are apparent to those skilled in the art from consideration of the specification and practice of the present disclosure. The present disclosure is intended to cover any variations, applications, or adaptations of the present disclosure. Such variations, applications, or adaptations follow the general principles of the present disclosure and include common knowledge or common technical means in the art that are not disclosed in the present disclosure, and are not limited to the precise structures described above and shown in the drawings. Various modifications and alterations may be made without departing from the scope thereof. The scope of the present disclosure is limited by only the appended claims.

**Claims**

1. A method for predicting a lifespan of a fan, comprising:

   acquiring an ambient temperature of the fan;
   calculating a mechanical factor lifespan and an environmental factor lifespan of the fan, in a case where the ambient temperature of the fan meets a first condition, wherein the first condition is that the ambient temperature is less than or equal to a first preset temperature, or that the ambient temperature is greater than or equal to a second preset temperature, where the first preset temperature is less than the second preset temperature; and
   fusing the mechanical factor lifespan and the environmental factor lifespan to output a remaining lifespan of the fan.

2. The method for predicting a lifespan of a fan according to claim 1, wherein the calculating a mechanical factor lifespan and an environmental factor lifespan of the fan, in a case where the ambient temperature of the fan meets a first condition, comprises:

   acquiring, for a fan motor, an initial rise time to reach a first preset speed and an initial fall time to reach a second preset speed;
   acquiring, for the fan motor, an actual rise time to reach the first preset speed and an actual fall time to reach the second preset speed; and
   characterizing the mechanical factor lifespan of the fan based on the initial rise time, the actual rise time, the initial fall time and the actual fall time of the fan motor.

3. The method for predicting a lifespan of a fan according to claim 2, wherein the method further comprises, before the characterizing the mechanical factor lifespan of the fan based on the initial rise time, the actual rise time, the initial fall time and the actual fall time of the fan motor:

   determining that the fan is ineffective in a case where the actual rise time of the fan motor is greater than or equal to twice the initial rise time; or
   determining that the fan is ineffective in a case where the actual fall time of the fan motor is less than or equal to half of the initial fall time.

4. The method for predicting a lifespan of a fan according to claim 2, wherein the characterizing the mechanical factor lifespan of the fan based on the initial rise time, the actual rise time, the initial fall time and the actual fall time of the fan motor comprises:

   calculating a rise time lifespan and a fall time lifespan of the fan based on the initial rise time, the actual rise time, the initial fall time and the actual fall time of the fan motor; and
   fusing the rise time lifespan and the fall time lifespan of the fan to obtain the mechanical factor lifespan of the fan.

5. The method for predicting a lifespan of a fan according to claim 1, wherein the fusing the mechanical factor lifespan and the environmental factor lifespan to output a remaining lifespan of the fan, further comprises:
   determining that the fan is ineffective in a case where the environmental factor lifespan of the fan is zero and/or the mechanical factor lifespan of the fan is zero.

6. The method for predicting a lifespan of a fan according to claim 5, further comprising:

   fusing the mechanical factor lifespan and the environmental factor lifespan by using a weighted coefficient method, in a case where the environmental factor lifespan of the fan and the mechanical factor lifespan of the fan are both greater than zero; and
outputting the remaining lifespan of the fan after the fusing.

7. The method for predicting a lifespan of a fan according to claim 1, further comprising:

acquiring a rated temperature of the fan;
calculating a loss factor of the fan lifespan based on the rated temperature of the fan and the ambient temperature; and
obtaining the environmental factor lifespan of the fan based on the loss factor of the fan lifespan.

8. The method for predicting a lifespan of a fan according to any one of claims 1 to 7, wherein the method further comprises, before the acquiring an ambient temperature of the fan:
acquiring initial data of the fan, wherein the initial data of the fan comprises a rated temperature and a lifespan of the fan, and an initial rise time and an initial fall time of a motor speed of the fan.

9. The method for predicting a lifespan of a fan according to claim 1, comprising:

calculating the environmental factor lifespan of the fan, in a case where the ambient temperature of the fan fails to meet the first condition; and
outputting the remaining lifespan of the fan based on the environmental factor lifespan of the fan and a lifespan of the fan in a previous state.

10. A system for predicting a lifespan of a fan, comprising:

an acquisition module, configured to acquire an ambient temperature of the fan; and
a processing module, configured to

calculate a mechanical factor lifespan and an environmental factor lifespan of the fan, in a case where the ambient temperature of the fan meets a first condition, wherein the first condition is that the ambient temperature is less than or equal to a first preset temperature, or that the ambient temperature is greater than or equal to a second preset temperature, where the first preset temperature is less than the second preset temperature, and
fuse the mechanical factor lifespan and the environmental factor lifespan to output a remaining lifespan of the fan.

11. A fan, comprising a memory and a processor, wherein

the memory stores computer executable instructions; and
the processor executes the computer executable instructions stored in the memory to perform the method for predicting a lifespan of a fan according to any one of claims 1 to 9.

12. A computer-readable storage medium, wherein the computer-readable storage medium has computer executable instructions stored thereon, and the computer executable instructions, when executed by a processor, implement the method for predicting a lifespan of a fan according to any one of claims 1 to 9.

13. A computer program product, comprising a computer program that, when executed by a processor, implements the method for predicting a lifespan of a fan according to any one of claims 1 to 9.

**Amended claims in accordance with Rule 137(2) EPC.**

1. A method for predicting a lifespan of a fan (50), comprising:

acquiring an ambient temperature of the fan (S102);
calculating a mechanical factor lifespan and an environmental factor lifespan of the fan (50), in a case where the ambient temperature of the fan (50) meets a first condition, wherein the first condition is that the ambient temperature is less than or equal to a first preset temperature, or that the ambient temperature is greater than or equal to a second preset temperature, where the first preset temperature is less than the second preset temperature (S104); and
fusing the mechanical factor lifespan and the environmental factor lifespan to output a remaining lifespan of the fan (S106),
the method being **characterized by** further comprising:

only calculating the environmental factor lifespan of the fan (50), in a case where the ambient temperature of the fan (50) fails to meet the first condition; and
outputting the remaining lifespan of the fan (50) based on the environmental factor lifespan of the fan (50) and a lifespan of the fan (50) in a previous state.

2. The method for predicting a lifespan of a fan according to claim 1, wherein the calculating a mechanical factor lifespan and an environmental factor lifespan of the fan (50), in a case where the ambient temperature of the fan (50) meets a first condition, comprises:

> acquiring, for a fan motor, an initial rise time ($t_1$) to reach a first preset speed and an initial fall time ($t_2$) to reach a second preset speed (S302); acquiring, for the fan motor, an actual rise time ($t_{up}$) to reach the first preset speed and an actual fall time ($t_{off}$) to reach the second preset speed (S304); and
> characterizing the mechanical factor lifespan of the fan (50) based on the initial rise time ($t_1$), the actual rise time ($t_{up}$), the initial fall time ($t_2$) and the actual fall time ($t_{off}$) of the fan motor (S306).

3. The method for predicting a lifespan of a fan according to claim 2, wherein the method further comprises, before the characterizing the mechanical factor lifespan of the fan (50) based on the initial rise time ($t_1$), the actual rise time ($t_{up}$), the initial fall time ($t_2$) and the actual fall time ($t_{off}$) of the fan motor (S306):

> determining that the fan (50) is ineffective in a case where the actual rise time ($t_{up}$) of the fan motor is greater than or equal to twice the initial rise time ($t_1$); or
> determining that the fan (50) is ineffective in a case where the actual fall time ($t_{off}$) of the fan motor is less than or equal to half of the initial fall time ($t_2$).

4. The method for predicting a lifespan of a fan according to claim 2, wherein the characterizing the mechanical factor lifespan of the fan (50) based on the initial rise time ($t_1$), the actual rise time ($t_{up}$), the initial fall time ($t_2$) and the actual fall time ($t_{off}$) of the fan motor (S306) comprises:

> calculating a rise time lifespan and a fall time lifespan of the fan (50) based on the initial rise time ($t_1$), the actual rise time ($t_{up}$), the initial fall time ($t_2$) and the actual fall time ($t_{off}$) of the fan motor; and
> fusing the rise time lifespan and the fall time lifespan of the fan (50) to obtain the mechanical factor lifespan of the fan (50).

5. The method for predicting a lifespan of a fan according to claim 1, wherein the fusing the mechanical factor lifespan and the environmental factor lifespan to output a remaining lifespan of the fan (S106), further comprises:
determining that the fan (50) is ineffective in a case where the environmental factor lifespan of the fan (50) is zero and/or the mechanical factor lifespan of the fan (50) is zero.

6. The method for predicting a lifespan of a fan according to claim 5, further comprising:

> fusing the mechanical factor lifespan and the environmental factor lifespan by using a weighted coefficient method, in a case where the environmental factor lifespan of the fan (50) and the mechanical factor lifespan of the fan (50) are both greater than zero; and
> outputting the remaining lifespan of the fan (50) after the fusing.

7. The method for predicting a lifespan of a fan according to claim 1, further comprising:

> acquiring a rated temperature of the fan (50); calculating a loss factor of the fan lifespan based on the rated temperature of the fan (50) and the ambient temperature; and
> obtaining the environmental factor lifespan of the fan (50) based on the loss factor of the fan lifespan.

8. The method for predicting a lifespan of a fan according to any one of claims 1 to 7, wherein the method further comprises, before the acquiring an ambient temperature of the fan (S102):

> acquiring initial data of the fan (50), wherein the initial data of the fan (50) comprises a rated temperature and a lifespan of the fan (50), and an initial rise time and an initial fall time of a motor speed of the fan (50).

9. A system for predicting a lifespan of a fan (50), comprising:

> an acquisition module, configured to acquire an ambient temperature of the fan (S102); and
> a processing module, configured to
>
>> calculate a mechanical factor lifespan and an environmental factor lifespan of the fan (50), in a case where the ambient temperature of the fan (50) meets a first condition, wherein the first condition is that the ambient temperature is less than or equal to a first preset temperature, or that the ambient temperature is greater than or equal to a second preset temperature, where the first preset temperature is less than the second preset temperature (S104), and
>> fuse the mechanical factor lifespan and the environmental factor lifespan to output a remaining lifespan of the fan (S106),
>
> the system being **characterized in that** the processing module is further configured to:

only calculate the environmental factor lifespan of the fan (50), in a case where the ambient temperature of the fan (50) fails to meet the first condition, and

output the remaining lifespan of the fan (50) based on the environmental factor lifespan of the fan and a lifespan of the fan (50) in a previous state.

**10.** A fan (50), comprising a memory (502) and a processor (501), wherein

the memory (502) stores computer executable instructions;

the fan being **characterized in that** the processor (501) executes the computer executable instructions stored in the memory (502) to perform the method for predicting a lifespan of a fan (50) according to any one of claims 1 to 8.

**11.** A computer-readable storage medium, wherein the computer-readable storage medium has computer executable instructions stored thereon, the computer-readable storage medium being **characterized in that** the computer executable instructions, when executed by a processor (501), implement the method for predicting a lifespan of a fan (50) according to any one of claims 1 to 8.

**12.** A computer program product, comprising a computer program, the computer program product being **characterized in that** the computer program, when executed by a processor (501), implements the method for predicting a lifespan of a fan (50) according to any one of claims 1 to 8.

S102

Acquire an ambient temperature of a fan

S104

Calculate a mechanical factor lifespan and an environmental factor lifespan of the fan, in a case where the ambient temperature of the fan meets a first condition

S106

Fuse the mechanical factor lifespan and the environmental factor lifespan to output a remaining lifespan of the fan

Fig. 1

Exponential function y=1.5^x

Fig. 2

S302

Acquire, for a fan motor, an initial rise time to reach a
first preset speed and an initial fall time to reach a
second preset speed

S304

Acquire, for the fan motor, an actual rise time to reach
the first preset speed and an actual fall time to reach the
second preset speed

S306

Characterize the mechanical factor lifespan of the fan
based on the initial rise time, the actual rise time, the
initial fall time and the actual fall time of the fan motor

Fig. 3

Rise time → Mechan-
ical
Fall time → factor
analysis → Data
fusion → Remaining
mechanical
lifespan →

Fig. 4

Mechanical
factor → Data
fusion → Remaining
lifespan →
Environmental
factor →

Fig. 5

Fan 50

Communication
component — 503

Processor — 501

Memory — 502

Fig. 6

Europäisches
Patentamt
European
Patent Office
Office européen
des brevets

# EUROPEAN SEARCH REPORT

**Application Number**

EP 25 15 0410

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 114 562 474 A (SUZHOU INSPUR INTELLIGENT TECHNOLOGY CO LTD) 31 May 2022 (2022-05-31) | 1-8, 10-13 | INV. F04D25/08 F04D27/00 |
| A | * the whole document * | 9 | F04D29/58 |
| X | CN 111 678 681 A (CHINA GREATWALL TECH GROUP CO LTD) 18 September 2020 (2020-09-18) | 1-8, 10-13 | |
| A | * the whole document * | 9 | |
| X | CN 105 868 530 A (LENOVO BEIJING LTD) 17 August 2016 (2016-08-17) | 1-8, 10-13 | |
| A | * the whole document * | 9 | |
| X | CN 111 382 519 A (SHENZHEN SUNDRAY TECH CO LTD) 7 July 2020 (2020-07-07) | 1-8, 10-13 | |
| A | * the whole document * | 9 | |
| A | EP 3 792 497 A1 (SCHNEIDER ELECTRIC IT CORP [US]) 17 March 2021 (2021-03-17) * paragraphs [0005], [0044], [0054], [0062] * | 1-13 | |

|  |
|---|
| **TECHNICAL FIELDS SEARCHED (IPC)** |
| F04D G06F |

The present search report has been drawn up for all claims

| Place of search | Date of completion of the search | Examiner |
|---|---|---|
| The Hague | 23 May 2025 | De Tobel, David |

EPO FORM 1503 03.82 (P04C01)

## ANNEX TO THE EUROPEAN SEARCH REPORT
## ON EUROPEAN PATENT APPLICATION NO.

EP 25 15 0410

This annex lists the patent family members relating to the patent documents cited in the above-mentioned European search report.
The members are as contained in the European Patent Office EDP file on
The European Patent Office is in no way liable for these particulars which are merely given for the purpose of information.

23-05-2025

| Patent document cited in search report | | Publication date | Patent family member(s) | | Publication date |
|---|---|---|---|---|---|
| CN 114562474 | A | 31-05-2022 | NONE | | |
| CN 111678681 | A | 18-09-2020 | NONE | | |
| CN 105868530 | A | 17-08-2016 | NONE | | |
| CN 111382519 | A | 07-07-2020 | NONE | | |
| EP 3792497 | A1 | 17-03-2021 | EP | 3792497 A1 | 17-03-2021 |
| | | | US | 2021072272 A1 | 11-03-2021 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202411059681